# EUROPÄISCHE PATENTSCHRIFT

(11) **EP 2 208 673 B1**
(45) Veröffentlichungstag und Bekanntmachung des Hinweises auf die Patenterteilung: **08.06.2011**
(21) Anmeldenummer: 10150495.9
(22) Anmeldetag: 12.01.2010
(51) Int. Cl.: B65B 13/06, B65B 13/18, F16B 5/00

(54) **Maschinengehäuse sowie Umreifungsmaschine mit Maschinengehäuse**
Machine housing and strapping machine with same
Boîtier de machine ainsi que machine de cerclage dotée d'un boîtier de machine

(30) Priorität: 15.01.2009 DE 102009005147
(43) Veröffentlichungstag der Anmeldung: 21.07.2010
(73) Patentinhaber: SSB Strapping Systeme Bayreuth GmbH, 95448 Bayreuth (DE)
(72) Erfinder: Sobel, Ralf, 42781 Haan (DE)
(74) Vertreter: Hennicke, Ernst Rüdiger

(56) Entgegenhaltungen:
- EP-A1- 0 744 506
- EP-A1- 1 489 008
- DE-A1- 3 330 221
- US-A- 3 194 407
- US-A- 3 360 321
- US-A- 4 251 969

## Beschreibung

Die Erfindung betrifft ein Maschinengehäuse insbesondere für eine Umreifungsmaschine, mit einem Rückwandteil, einem Vorderwandteil, mindestens zwei Seitenwandteilen und mindestens einer mit den Wandteilen oben und/oder unten randseitig verbundenen Abdeckplatte. Die Erfindung ist ferner auf eine Umreifungsmaschine gerichtet, die mit einem Maschinengehäuse versehen ist (siehe zB. EP 1 489 008 A1).

Maschinengehäuse für Umreifungsmaschinen oder andere gewerblich eingesetzte Gerätschaften dienen zum einen dazu, die zum Teil empfindlichen Aggregate der Maschinen vor äußeren Einflüssen, insbesondere Schmutz und Feuchtigkeit zu schützen, zum anderen auch dazu, Teile der Maschine zu tragen. Häufig werden von dem Maschinengehäuse auch Geräusche gedämpft, die von den durch das Gehäuse eingekapselten Maschinenaggregaten verursacht werden.

Um den an sie gestellten Anforderungen an eine hohe Stabilität der Gehäuse gerecht zu werden, werden die einzelnen Wandteile bei den bekannten Maschinengehäusen insbesondere für Umreifungsmaschinen entweder miteinander verschweißt, verklebt oder durch andere stabile Verbindungen miteinander verbunden. Abgesehen davon, dass das Verschweißen der aus Blechen bestehenden Wandteile untereinander und/oder mit einer unteren oder oberen Abdeckplatte vergleichsweise aufwendig ist, hat diese Verbindungsmethode den Nachteil, dass der Zugang zum Inneren des Gehäuses beispielsweise zu Wartungszwecken nach dem Verschweißen nicht oder nur noch schwer möglich ist. Dem muss durch besondere konstruktive Maßnahmen Rechnung getragen werden, beispielsweise durch Revisionsöffnungen in den Wandteilen des Gehäuses oder dgl. Der konstruktive Aufwand wird hierdurch erheblich. Konstruktionen, bei denen die Wandteile untereinander und/oder am Boden oder Deckblech mittels Schraubverbindungen befestigt sind, lassen zwar eine Demontage wieder zu. Um die geforderte Stabilität zu erreichen, sind aber regelmäßig viele Befestigungsschrauben erforderlich, was die Montage langwierig und teuer macht. Aufgabe der Erfindung ist es daher, ein Maschinengehäuse insbesondere für eine Umreifungsmaschine zu schaffen, das sich aus seinen einzelnen Bestandteilen sehr schnell zu einem stabilen Gesamtaufbau zusammensetzen und bei Bedarf auch wieder demontieren lässt.

Gelöst wird diese Aufgabe dadurch, dass die Wandteile oder die Abdeckplatte (n) mit seitlich offenen Steckhakenelementen versehen sind, die in am jeweiligen Gegenteil vorgesehene, angepasste Hakenaufnahmeschlitze eingeführt und durch Verschieben in einer Verriegelungsrichtung rechtwinklig zur Einführrichtung verriegelt sind, wobei die Verriegelungsrichtung der Seitenwandteile rechtwinklig zur Verriegelungsrichtung des Rückwandteils und des Vorderwandteils verläuft.

Die Verbindung von Konstruktionselementen durch seitlich offene Steckhakenelemente und daran angepasste Hakenaufnameschlitze ist per se bekannt, siehe z.B. EP 0 744 506 A1.

Durch diese konstruktive Gestaltung lässt sich also das Maschinengehäuse im Steckverfahren montieren, wobei die verschiedenen Verriegelungsrichtungen der Seitenwandteile einerseits und des Vorder- und Rückwandteils andererseits eine besonders hohe Stabilität des fertig zusammengesteckten Maschinengehäuses gewährleistet.

In bevorzugter Ausgestaltung der Erfindung können die Wandteile unterseitig mit einem eine erste Abdeckplatte bildenden Boden und oberseitig mit einem eine zweite Abdeckplatte bildenden Deckelteil verbunden sein. Man erhält hierdurch einen allseitig geschlossenen Kasten als Maschinengehäuse. Vorzugsweise haben die Steckhakenelemente eine sich entgegen der Einschubrichtung verringernde Öffnungsweite, womit beim Ansteck- und Verriegelungsvorgang ein leichtes Einfädeln der Hakenelemente am stirnseitigen Randbereich der Hakenaufnahmeschlitze und eine Selbstzentrierung bzw. -klemmung bewirkt wird.

Besonders vorteilhaft ist es, wenn die Steckhakenelemente einen sich entgegen der Einschubrichtung verjüngenden Zentrierbereich und einen sich daran anschließenden Klemmbereich aufweisen, der im eingesteckten Zustand des jeweiligen Wandteils mit einem Presssitz an dem den zugehörigen Aufnahmeschlitz stirnseitig begrenzenden Teil des jeweiligen Gegenstückes anliegt.

Damit sich die Bauelemente des Maschinengehäuses aus dem zusammengebauten Zustand nicht unbeabsichtigt, lösen können, beispielsweise beim Auftreten stärkerer Vibrationen oder dgl., ist es vorteilhaft, wenn die mittels der Steckhakenelemente in den zugehörigen Hakenaufnahmeschlitzen an der/den Abdeckplatte(n) festgelegten Wandteile mittels Lagesicherungselementen in ihrer verriegelten Lage arretierbar sind. Solche Lagesicherungselemente können beispielsweise Sicherungsschrauben, umbiegbare Blechfahnen, Sprengringe oder dgl. sein, die tatsächlich keine nennenswerten Kräfte zu übertragen haben, sondern lediglich eine Bewegung der Wandteile entgegen der Verriegelungsrichtung unterbinden. Es reicht somit völlig aus, für jedes Wandteil lediglich eine oder höchstens zwei Sicherungsschrauben oder dgl. vorzusehen. Aufgrund der im rechten Winkel zueinander verlaufenden, unterschiedlichen Einschubrichtungen der Seitenteile einerseits und des Vorder- und Rückwandteils andererseits bewirkt ein einziges Lagesicherungselement - beispielsweise eine Schraube -, das im Stoßbereich zweier Wandelemente (also an einer Ecke des Maschinengehäuses) diese miteinander verbindet, dass weder das eine noch das andere der beiden mit dem Lagesicherungselement miteinander verriegelten Wandelemente aus den Aufnahmeschlitzen heraus gleiten kann.

Die Verriegelungsrichtung der beiden Seitenwandteile einerseits und des Vorder- und Rückenwandteils andererseits kann jeweils gleichsinnig sein. In manchen Fällen ist es aber auch vorteilhaft, wenn die Verriegelungsrichtung des einen Seitenwandteils entgegen der Verriegelungsrichtung des zweiten Seitenwandteils verläuft und/oder wenn die Verriegelungsrichtung des Rückwandteils entgegen der Verriegelungsrichtung des Vorderwandteils verläuft. Mit einer derartigen Ausgestaltung lassen sich die Wandteile eindeutig in ihrer Lage der jeweiligen Abdeckplatte, an der sie angesteckt werden sollen, zuordnen, Fehlmontagen können hierdurch leicht vermieden werden.

Die Montage des Maschinengehäuses kann beispielsweise so erfolgen, dass die Seitenwandteile erst eingebaut werden, nachdem das Vorderwandteil und das Rückwandteil an der bodenseitigen Abdeckplatte angesteckt und die obere Abdeckplatte an dem Vorder- und Rückwandteil durch anstecken montiert wurden. Um die Seitenwandteile in diesem Baustadium des Maschinengehäuses dann einfach anbauen zu können, können in der einen der beiden Abdeckplatten, beispielsweise der bodenseitigen Abdeckplatte, im Bereich der Hakenaufnahmeschlitze seitlich offene Ausbrüche vorgesehen sein, so dass die Seitenbleche mit ihren Steckhakenelementen in die jeweils andere Abdeckplatte, also dann der beispielsweise oberen Abdeckplatte, leicht schräg nach außen gekippt eingesteckt werden können und dann in einer Schwenkbewegung gegen die Stirnseiten des Vorder- und Rückwandteils geschwenkt werden, wobei ihre anderen Steckhakenelemente durch die Ausbrüche hindurch schwenken und dadurch in die Hakenaufnahmeschlitze in der ersten (bodenseitigen) Abdeckplatte gelangen können. Die Seitenwände werden dann durch Verschieben senkrecht zur Verriegelungsrichtung der Vorder- und Rückwand in ihren Hakenaufnahmeschlitzen verriegelt.

Eine Umreifungsmaschine, die mit einem Maschinengehäuse der vorstehend beschriebenen Art versehen ist, lässt sich - wie dargelegt - nicht nur einfach und schnell montieren, sondern auch leicht warten, da die einfache Demontierbarkeit des Maschinengehäuses einen problemlosen Zugang zu allen darin aufgenommenen Maschinenaggregaten ermöglicht. Das Maschinengehäuse der Umreifungsmaschine kann in vorteilhafter Weiterbildung der Erfindung an einem höhenverstellbaren Untergestell montiert sein, wobei es besonders zweckmäßig ist, wenn das Untergestell gleichfalls mit aufragenden, seitlich offenen Steckhakenelementen versehen ist, die im montierten Zustand des Maschinengehäuses durch an dessen Boden ausgebildete Hakenaufnahmeschlitze fassen und infolge einer Verschiebung des Maschinengehäuses in einer Verriegelungsrichtung formschlüssig mit dem Untergestell verriegeln. Hier kommt also in zweckmäßiger Ausgestaltung der Erfindung dieselbe Verbindungstechnik zum Einsatz, mit der auch die Wandteile an der/den Abdeckplatte(n) befestigt sind. Das Untergestell kann vorzugsweise fahrbar ausgestaltet sein, wodurch die Umreifungsmaschine mobil wird und an die bevorzugte Stelle ihres Einsatzes verschoben werden kann.

Weitere Merkmale und Vorteile der Erfindung ergeben sich, aus der nachfolgenden Beschreibung und der Zeichnung, worin eine bevorzugte Ausführungsform der Erfindung anhand eines Beispiels näher erläutert ist. Es zeigt:
- **Fig. 1**: eine ein erfindungsgemäßes Maschinengehäuse aufweisen- de Umreifungsmaschine in einer perspektivischen Dar- stellung;
- **Fig. 2**: die Umreifungsmaschine nach Fig. 1 in einer Explosi- onsdarstellung;
- **Fig. 3**: das Maschinengehäuse der Umreifungsmaschine im zusam- mengebauten Zustand in einer vergrößerten Darstellung;
- **Fig. 4**: eine Einzelheit IV. nach Fig. 3; und
- **Fig. 5a-c**: den Ablauf des Anbaus einer Bodenplatte des Maschinen- gehäuses an einem Untergestell in drei verschiedenen Stadien in einer Schnittdarstellung.

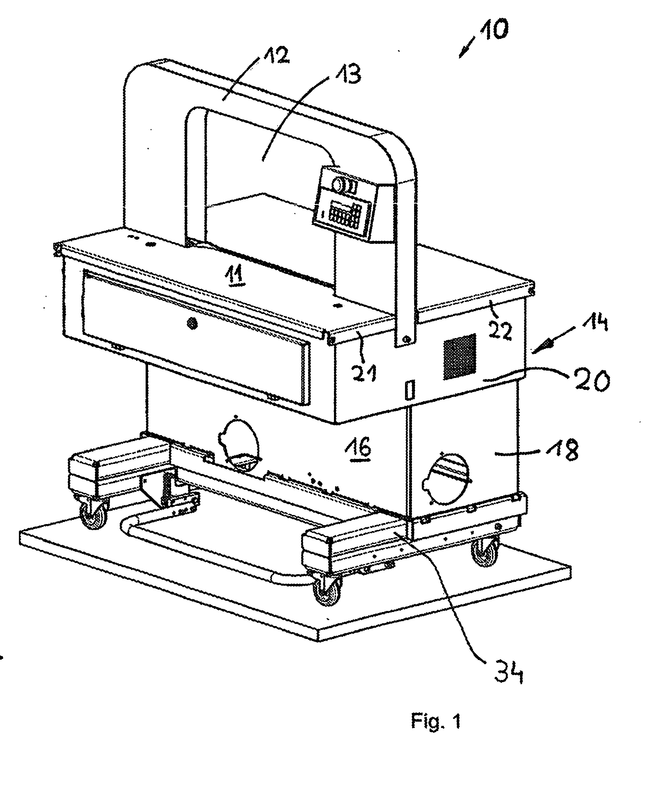

Die in Fig. 1 dargestellte, in ihrer Gesamtheit mit 10 bezeichnete Umreifungsmaschine dient dazu, (nicht dargestellte) Packstücke wie beispielsweise kleine bis mittelgroße Pakete, Zeitungsstapel oder dgl. mit einer Umreifung aus Kunststoffband oder einem sonstigen Umreifungsmaterial zu versehen, das um das Packstück geschlungen und bei Erreichen der gewünschten Umreifungsspannung zu einer geschlossenen Schlaufe verschweißt oder auf andere Art geschlossen wird. Hierzu wird das Umreifungsband von einem nicht dargestellten Bandvorschubaggregat in einen den Bearbeitungstisch 11 portalartig übergreifenden Bandführungskanal 12 eingeschossen, das eine Bandende von einer Haltevorrichtung festgehalten und das andere Bandende dann wieder zurückgezogen. Das Umreifungsband tritt dann durch sich nach innen, d.h. zum Durchlassfenster 13, in dem das Packstück liegt, öffnende Klappen aus dem Bandkanal aus und legt sich seitlich sowie ober- und unterseitig an das Packstück an. Sobald es die gewünschte Bandspannung. erreicht hat, wird es von einer Reibschweißvorrichtung verschweißt.

Umreifungsmaschinen dieser Art sind im Stand der Technik bekannt, ihre genaue Funktionsweise soll hier nicht weiter erläutert werden. Die verschiedenen Maschinenaggregate, wie Bandvorschubeinrichtung, Bandspanneinrichtung, Schweißeinrichtung wie auch die Bandvorratstrommel sind im Inneren eines Maschinengehäuses 14 aufgenommen, das Gegenstand der vorliegenden Erfindung ist.

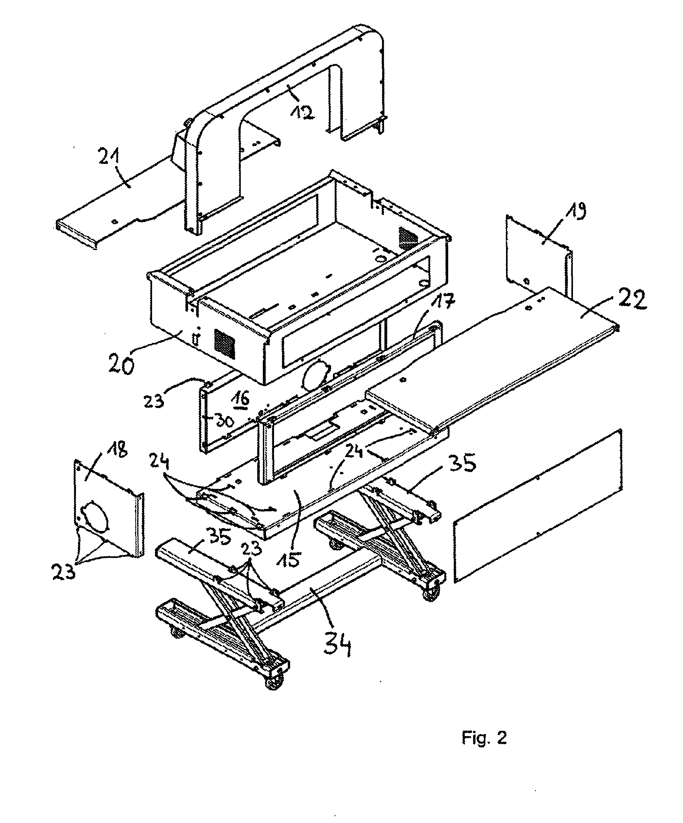

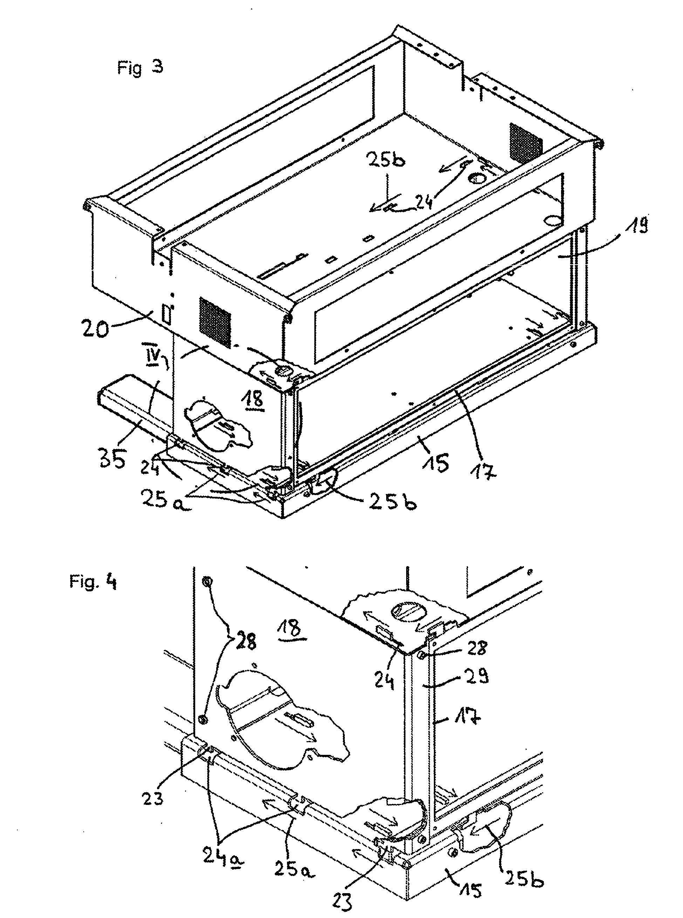

Wie man am Besten aus den Figuren 2 und 3 erkennen kann, weist das Maschinengehäuse 14 eine untere Abdeckplatte 15 als Boden, ein Rückwandteil 16, ein Vorderwandteil 17 sowie zwei Seitenwandteile 18, 19 auf. An der Oberseite der Wandteile 16-19 ist eine obere Abdeckplatte 20 als Deckelteil vorgesehen, das bei der hier dargestellten Ausführungsform der Umreifungsmaschine als Kastenelement ausgebildet ist, das an seiner Oberseite mit zwei aufklappbaren Tischplattenelementen 21, 22 verschlossen ist, die den Bearbeitungstisch 11 bilden.

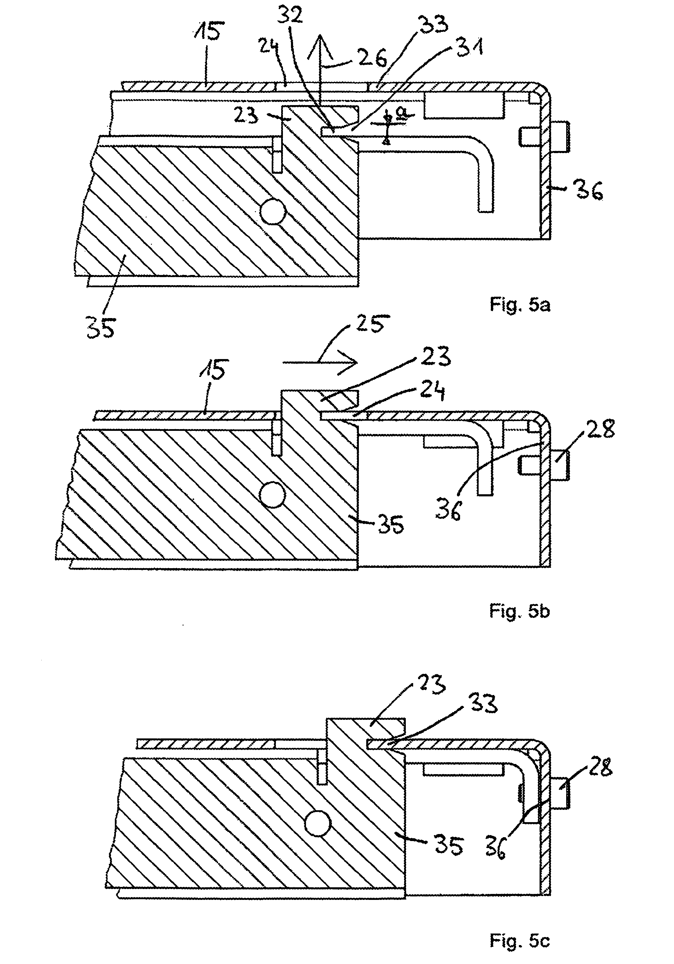

Man erkennt insbesondere aus den Figuren 3 bis 5, dass die Wandteile 16-19 an der Bodenplatte 15 und dem Deckelteil 20 mittels Steckhakenelementen 23 befestigt sind, die an den unteren und oberen Rändern der Wandteile nach unten bzw. oben vorspringen, seitlich offen sind und in an den Abdeckplatten 15, 20 vorgesehene Hakenaufnahmeschlitze 24 eingeführt und durch Verschieben in einer Verriegelungsrichtung 25 rechtwinklig zur Einführrichtung 26 (Fig. 5) verriegelt sind. Erfindungsgemäß ist die Anordnung dabei so getroffen, dass die Verriegelungsrichtung 25a der Seitenwandteile 18, 19 rechtwinklig zur Verriegelungsrichtung 25b des Rückwandteils 16 und des Vorderwandteil 17 verläuft.

Die Montage des Maschinengehäuses erfolgt so, dass die Seitenwandteile 18,19 erst eingebaut werden, nachdem das Vorderwandteil 17 und das Rückwandteil 16 an der bodenseitigen Abdeckplatte 15 angesteckt und die obere Abdeckplatte 20 an dem Vorder- und Rückwandteil 17,16 durch Anstecken montiert wurden. Um die Seitenwandteile 18,19 in diesem Baustadium des Maschinengehäuses dann einfach anbauen zu können, sind in der bodenseitigen Abdeckplatte 15 im Bereich der Hakenaufnahmeschlitze seitlich offene Ausbrüche 24a vorgesehen sein, so dass die Seitenbleche 18,19 in einer leicht schräg nach außen gekippten Stellung mit ihren oberen Steckhakenelementen 23 in die Aufnahmeschlitze 24 der oberen Abdeckplatte von unten eingesteckt werden können und dann in einer Schwenkbewegung gegen die Stirnseiten des Vorder- und Rückwandteils geschwenkt werden, wobei ihre unteren Steckhakenelemente durch die Ausbrüche 24a hindurch in die Hakenaufnahmeschlitze 24 in Bodenplatte 15 hineinschwenken. Die Seitenwände werden dann durch Verschieben senkrecht zur Verriegelungsrichtung der Vorder- und Rückwand in ihren Hakenaufnahmeschlitzen verriegelt.

In ihrer Verriegelungsstellung, in der die Steckhakenelemente mit ihren seitlich vorspringenden Hakenenden 27 unter das die Hakenaufnahmen 24 stirnseitig begrenzende Blech des Bodens 15 bzw. des Deckelteils 20 fassen, sind die Wandteile mit Sicherungsschrauben 28 gesichert. Hierzu sind die Seitenwandteile 18, 19 in jeweils einem Eckbereich um 90° abgewinkelt und der abgewinkelte Streifen 29 liegt parallel zum Vorderwandteil 17 und ist mit diesem mittels der Sicherungsschrauben 28 verschraubt. An den jeweils gegenüberliegenden Eckbereichen, an denen die Seitenwandteile 18, 19 am Rückwandteil 16 anstoßen, sind die Sicherungsschrauben durch in der Seitenwandfläche vorgesehene Bohrungen gesteckt und in Gewindebohrungen eingeschraubt, die sich an einem abgewinkelten Befestigungssteg 30 des Rückwandteils 16 befinden.

Aufgrund der unterschiedlichen Verriegelungsrichtungen 25a, b, mit denen die Seitenwandteile einerseits und Vorder- und Rückwandteil andererseits montiert werden, erhält das komplette, aus den vier Wandteilen und der unteren und oberen Abdeckplatte 15 und 20 zusammengebaute Maschinengehäuse eine sehr große Stabilität, die noch dadurch begünstigt wird, dass die Steckhakenelemente 23 eine sich entgegen der Verriegelungsrichtung verringernde Öffnungsweite a haben. Tatsächlich ist die Anordnung so getroffen, dass die Steckhakenelemente einen sich entgegen der Verriegelungsrichtung verjüngenden Zentrierbereich 31 und einen sich daran anschließenden Klemmbereich aufweisen, wobei der Zentrierbereich 31 nach dem Einstecken der Steckhakenelemente in die Hakenaufnahmen zu Beginn der Verriegelung durch seitliches Verschieben der Wandelemente dafür sorgt, dass das die Hakenaufnahmen stirnseitig begrenzende Blech des Bodenteils bzw. Deckelteils zuverlässig zwischen die beiden Klemmseiten der Hakenelemente gelangt. Im fertig eingesteckten Zustand sitzt der Klemmbereich 32 mit Presssitz auf dem den Aufnahmeschlitz stirnseitig begrenzenden Blechteil 33 und die Sicherungsschrauben 28 dienen lediglich dazu, ein unbeabsichtigtes Öffnen dieser formschlüssigen Verbindungen zwischen Wandteilen und Abdeckplatten zu verhindern.

Diese besonders vorteilhafte Gestaltung der Verbindung der Wandteile mit dem Maschinengehäuseboden 15 und dem oberen Deckelteil 20 mittels in passende Aufnahmen einfassenden Steckhakenelementen lässt sich auch bei anderen Teilen der Umreifungsmaschinen mit Vorteil einsetzen. Man kann insbesondere in Fig. 2 gut erkennen, dass das Maschinengehäuse an einem höhenverstellbaren Untergestell 34 angeordnet ist, wobei auch hier die Befestigung mittels Steckhakenelementen erfolgt, die an zwei Quertraversen 35 des Untergestells aufragend angeordnet sind und an denen die Bodenplatte 15 des Maschinengehäuses 14 angesteckt ist. Die Bodenplatte weist hierzu in Lage und Anzahl an die Haken an den Quertraversen angepasste Aufnahmeschlitze 24 auf. Zur Lagesicherung sind wiederum Sicherungsschrauben vorgesehen, die durch Bohrungen fassen, die in nach unten umgebogenen Randleisten 36 der Bodenplatte vorgesehen sind, um an stirnseitig an den Quertraversen 35 vorgesehene Gewindebohrungen eingeschraubt zu werden (vgl. auch Fig. 5).

Das erfindungsgemäße Maschinengehäuse und die damit ausgestattete Umreifungsmaschine lassen sich in kürzester Zeit montieren und auch wieder auseinanderbauen, beispielsweise wenn dies erforderlich ist, um Zugang zu den nicht dargestellten, im Maschinengehäuse aufgenommenen Komponenten und Aggregaten der Maschine zu erhalten.

## Patentansprüche

1. Maschinengehäuse insbesondere für eine Umreifungsmaschine, mit einem Rückwandteil (16), einem Vorderwandteil (17), mindestens zwei Seitenwandteilen (18, 19) und mindestens einer mit den Wandteilen (16-19) oben und/oder unten randseitig verbundenen Abdeckplatte (15; 20), wobei die Wandteile (16-19) oder die Abdeckplatte (15; 20) mit seitlich offenen Steckhakenelementen (23) versehen sind, die in am jeweiligen Gegenteil (15, 20) vorgesehene, angepasste Hakenaufnahmeschlitze (24) eingeführt und durch Verschieben in einer Verriegelungsrichtung (25) rechtwinklig zur Einführrichtung (26) verriegelt sind, wobei die Verriegelungsrichtung (25a) der Seitenwandteile (18, 19) rechtwinklig zur Verriegelungsrichtung (25b) des Rückwandteils (16) und des Vorderwandteils (17) verläuft.

2. Maschinengehäuse nach Anspruch 1, **dadurch gekennzeichnet, dass** die Wandteile (16-19) unterseitig mit einem eine erste Abdeckplatte (15) bildenden Boden und oberseitig mit einem eine zweite Abdeckplatte (20) bildenden Deckelteil verbunden sind.

3. Maschinengehäuse nach Anspruch 1 oder 2, **dadurch gekennzeichnet, dass** die Steckhakenelemente (23) eine sich entgegen der Verriegelungsrichtung (25) verringernde Öffnungsweite (a) haben.

4. Maschinengehäuse nach einem der Ansprüche 1 bis 3, **dadurch gekennzeichnet, dass** die Steckhakenelemente (23) einen sich entgegen der Verriegelungsrichtung (25) verjüngenden Zentrierbereich (31) und einen sich daran anschließenden Klemmbereich (32) aufweisen, der im eingesteckten Zustand des jeweiligen Wandteils (16-19) oder der Abdeckplatte mit einem Presssitz an dem den zugehörigen Aufnahmeschlitz (24) stirnseitig begrenzenden Teil (33) des jeweiligen Gegenteils (15; 20) anliegt.

5. Maschinengehäuse nach einem der Ansprüche 1 bis 4, **dadurch gekennzeichnet, dass** die mittels der Steckenhakenelemente (23) in den zugehörigen Hakenaufnahmeschlitzen (24) an der/den Abdeckplatten (15, 20) festgelegten Wandteile (16-19) mittels Lagesicherungselementen (28) in ihrer verriegelten Lage arretierbar sind.

6. Maschinengehäuse nach Anspruch 5, **dadurch gekennzeichnet, dass** die Lagesicherungselemente (28) Sicherungsschrauben, umbiegbare Blechfahnen, Sprengringe oder dgl. sind.

7. Maschinengehäuse nach einem der Ansprüche 1 bis 6, **dadurch gekennzeichnet, dass** die Verriegelungsrichtung des einen Seitenwandteils entgegen der Verriegelungsrichtung des zweiten Seitenwandteils verläuft.

8. Maschinengehäuse nach einem der Ansprüche 1 bis 7, **dadurch gekennzeichnet, dass** die Verriegelungsrichtung des Rückwandteils entgegen der Verriegelungsrichtung des Vorderwandteils verläuft.

9. Maschinengehäuse nach einem der Ansprüche 1 bis 8, **dadurch gekennzeichnet, dass** mindestens die eine der beiden Abdeckplatten (15,20), im Bereich der Hakenaufnahmeschlitze (24) für die Seitenwandteile (18,19) oder für das Vorder- und Rückwandteil (17,16) mit seitlich offenen Ausbrüchen (24a) versehen ist.

10. Umreifungsmaschine mit einem Maschinengehäuse (14) nach einem der Ansprüche 1 bis 9.

11. Umreifungsmaschine nach Anspruch 10, **dadurch gekennzeichnet, dass** das Maschinengehäuse (14) an einem höhenverstellbaren Untergestell (34) montiert ist.

12. Umreifungsmaschine nach Anspruch 11, **dadurch gekennzeichnet, dass** das Untergestell (34) mit aufragenden, seitlich offenen Steckhakenelementen (23) versehen ist, die im montierten Zustand des Maschinengehäuses durch an dessen Boden (15) ausgebildete Hakenaufnahmeschlitze (24) fassen und infolge einer Verschiebung des Maschinengehäuses (14) in einer Verriegelungsrichtung dieses formschlüssig mit dem Untergestell (34) verriegeln.

13. Umreifungsmaschine nach einem der Ansprüche 10 bis 12, **dadurch gekennzeichnet, dass** das Untergestell (34) fahrbar ist.

## Claims

1. Machine housing, in particular for a strapping machine, comprising a rear wall part (16), a front wall part (17), at least two side wall parts (18, 19) and at least one cover plate (15; 20), connected to the wall parts (16-19) on the upper and/or lower faces at the edges, wherein the wall parts (16-19) or the cover plate (15; 20) are provided with laterally open insertion hook members (23), which are introduced into matching hook-receiving slots (24) provided on the respective counter part (15, 20) and are latched by displacement in a latching direction (25) perpendicular to the introduction direction (26), the latching direction (25a) of the side wall parts (18, 19) extending perpendicular to the latching direction (25b) of the rear wall part (16) and the front wall part (17).

2. Machine housing according to claim 1, **characterised in that** the wall parts (16-19) are connected to a base forming a first cover plate (15) at the lower face and a lid part forming a second cover plate (20) at the upper face.

3. Machine housing according to either claim 1 or claim 2, **characterised in that** the insertion hook members (23) have an opening width (a) which decreases counter to the latching direction (25).

4. Machine housing according to any one of claims 1 to 3, **characterised in that** the insertion hook members (23) comprise a centring region (31), which tapers counter to the latching direction (25), and a clamping region (32) adjacent thereto, which when the respective wall part (16-19) or the cover plate is inserted lies in an interference fit on the part (33), which delimits the respective receiving slot (24) at the end faces, of the respective counter part (15; 20).

5. Machine housing according to any one of claims 1 to 4, **characterised in that** the wall parts (16-19), which are fastened to the cover plate(s) (15, 20) by means of the insertion hook members (23) in the associated hook-receiving slots (24), can be locked in the latched position thereof by positional fixing members (28).

6. Machine housing according to claim 5, **characterised in that** the positional fixing members (28) are fixing screws, pliable metal sheets, snap rings or the like.

7. Machine housing according to any one of claims 1 to 6, **characterised in that** the latching direction of one side wall part extends counter to the latching direction of the second side wall part.

8. Machine housing according to any one of claims 1 to 7, **characterised in that** the latching direction of the rear wall part extends counter to the latching direction of the front wall part.

9. Machine housing according to any one of claims 1 to 8, **characterised in that** at least one of the two cover plates (15, 20) is provided with laterally open cavities (24a) in the region of the hook-receiving slots (24) for the side wall parts (18, 19) or for the front and rear wall part (17, 16).

10. Strapping machine comprising a machine housing (14) according to any one of claims 1 to 9.

11. Strapping machine according to claim 10, **characterised in that** the machine housing (14) is mounted on a height-adjustable frame (34).

12. Strapping machine according to claim 11, **characterised in that** the frame (34) is provided with protruding, laterally open insertion hook members (23), which when the machine housing is assembled reach through hook-receiving slots (24) formed in the base (15) thereof and latch onto the frame (34) in a positive fit as a result of a displacement of the machine housing (14) in a latching direction.

13. Strapping machine according to any one of claims 10 to 12, **characterised in that** the frame (34) is portable.

## Revendications

1. Boîtier de machine, en particulier pour une machine de cerclage, comprenant une partie de paroi arrière (16), une partie de paroi avant (17), au moins deux parties de paroi latérales (18, 19) et au moins une plaque de recouvrement (15 ; 20) raccordée aux parties de paroi (16-19) au-dessus et/ou au-dessous sur le bord, dans lequel les parties de paroi (16-19) ou la plaque de recouvrement (15 ; 20) est ou sont pourvues d'éléments (23) de crochets enfichables ouverts latéralement, qui sont introduits dans des fentes (24) réceptrices de crochets adaptées prévues dans la partie antagoniste respective (15, 20) et verrouillés par déplacement dans un dispositif de verrouillage (25) à angle droit avec la direction d'introduction (26), dans lequel la direction de verrouillage (25a) des parties de paroi latérales (18, 19) s'étend à angle droit avec la direction de verrouillage (25b) de la partie de paroi arrière (16) et de la partie de paroi avant (17).

2. Boîtier de machine selon la revendication 1, **caractérisé en ce que** les parties de paroi (16-19) sont raccordées, dans la partie inférieure, avec un fond formant une première plaque de recouvrement (15) et, dans la partie supérieure, avec une partie de couvercle formant une deuxième plaque de recouvrement (20).

3. Boîtier de machine selon la revendication 1 ou 2, **caractérisé en ce que** les éléments (23) de crochets enfichables ont une largeur d'ouverture (a) qui se réduit à l'encontre de la direction de verrouillage (25).

4. Boîtier de machine selon l'une quelconque des revendications 1 à 3, **caractérisé en ce que** les éléments (23) de crochets enfichables présentent une zone de centrage (31) se réduisant à l'encontre de la direction de verrouillage (25) et une zone de serrage (32) qui s'y raccorde, ladite zone de serrage s'appliquant, à l'état enfiché de la partie de paroi respective (16-19) ou de la plaque de recouvrement, avec un ajustement serré sur la partie (33) de la partie antagoniste respective (15 ; 20) délimitant frontalement la fente réceptrice (24) correspondante.

5. Boîtier de machine selon l'une quelconque des revendications 1 à 4, **caractérisé en ce que** les parties de paroi (16-19) fixées au moyen des éléments (23) de crochets enfichables dans les fentes (24) réceptrices de crochets correspondantes sur la ou les plaques de recouvrement (15, 20) peuvent être bloquées dans leur position verrouillée au moyen d'éléments (28) de sécurisation de position.

6. Boîtier de machine selon la revendication 5, **caractérisé en ce que** les éléments (28) de sécurisation de position sont des vis de sécùrité, des talons de tôle, des circlips ou similaires.

7. Boîtier de machine selon l'une quelconque des revendications 1 à 6, **caractérisé en ce que** la direction de verrouillage de la première partie de paroi latérale s'étend à l'encontre de la direction de verrouillage de la deuxième partie de paroi latérale.

8. Boîtier de machine selon l'une quelconque des revendications 1 à 7, **caractérisé en ce que** la direction de verrouillage de la partie de paroi arrière s'étend à l'encontre de la direction de verrouillage de la partie de paroi avant.

9. Boîtier de machine selon l'une quelconque des revendications 1 à 8, **caractérisé en ce que** la première des plaques de recouvrement (15, 20) est pourvue de cavités (24a) ouvertes latéralement dans la zone des fentes (24) réceptrices de crochets pour les parties de paroi latérales (18, 19) ou pour les parties avant et arrière (17, 16).

10. Machine de cerclage comprenant un boîtier de machine (14) selon l'une quelconque des revendications 1 à 9.

11. Machine de cerclage selon la revendication 10, **caractérisée en ce que** le boîtier de machine (14) est monté sur un sous-châssis (34) réglable en hauteur.

12. Machine de cerclage selon la revendication 11, **caractérisée en ce que** le sous-châssis (34) est pourvu d'éléments (23) de crochets enfichables ouverts latéralement et saillants, qui, à l'état monté du boîtier de machine, passent par des fentes (24) réceptrices de crochets formées sur son fond et, à la suite d'un déplacement du boîtier de machine (14) dans une direction de verrouillage, verrouillent celle-ci par adaptation déformes avec le sous-châssis (34).

13. Machine de cerclage selon l'une quelconque des revendications 10 à 12, **caractérisée en ce que** le sous-châssis (34) est mobile.
